# EUROPÄISCHE PATENTSCHRIFT

(11) **EP 4 160 325 B1**
(45) Veröffentlichungstag und Bekanntmachung des Hinweises auf die Patenterteilung: **12.07.2023**
(21) Anmeldenummer: 21199937.0
(22) Anmeldetag: 29.09.2021
(51) Int. Cl.: G05B 19/042, G05B 19/12

(54) **SENSORANORDNUNG UND VERFAHREN ZUM BETRIEB EINER SENSORANORDNUNG**
SENSOR ASSEMBLY AND METHOD FOR OPERATING A SENSOR ASSEMBLY
AGENCEMENT DE CAPTEUR ET PROCÉDÉ DE FONCTIONNEMENT D'UN AGENCEMENT DE CAPTEUR

(43) Veröffentlichungstag der Anmeldung: 05.04.2023
(73) Patentinhaber: Leuze electronic GmbH + Co. KG, 73277 Owen/Teck (DE)
(72) Erfinder: Köbel, Herbert, 73277 Owen/Teck (DE); Feinauer, Dr. Julian, 73230 Kirchheim/Teck (DE); Eckhardt, Hasko, 72076 Tübingen (DE)
(74) Vertreter: Ruckh, Rainer Gerhard

(56) Entgegenhaltungen:
- EP-A1- 3 179 434
- EP-A1- 3 667 445
- DE-A1-102018 100 424

## Beschreibung

Die Erfindung betrifft eine Sensoranordnung und ein Verfahren zum Betrieb einer Sensoranordnung.

Derartige Sensoranordnungen werden in Anlagen, wie zum Beispiel Produktionslinien zur Herstellung bestimmter Güter, eingesetzt, um Arbeitsvorgänge zu steuern, zu kontrollieren und zu überwachen.

Die Sensoranordnung umfasst typischerweise eine Anordnung von über die Produktionslinie verteilt angeordneten Sensoren, die insbesondere in Form von Codelesern bildenden optischen Sensoren ausgebildet sind. Mit diesen Codelesern werden Betriebsmittel in Form von Marken erfasst, die auf Objekten angeordnet sind, die entlang der Produktionslinie geführt sind. Die einzelnen Codeleser können über ein Bussystem an eine gemeinsame Steuerung angeschlossen sein. Die Steuerung kann anhand der von den Codelesern gelesenen Marken erfassen, welche Objekte von welchem Sensor erfasst werden und so Arbeits-und/oder Produktionsvorgänge steuern.

Ein Problem bei derartigen Anlagen besteht darin, dass bei notwendigen Änderungen wie zum Beispiel geänderten Produktionsvorgaben, das Eingreifen eines Planers notwendig macht. Dies erfordert eine relativ hohe Reaktionszeit.

Insbesondere ist diese Vorgehensweise nachteilig bei auftretenden Störungen oder Beeinträchtigungen der Sensorfunktionalitäten. Hierzu gehören insbesondere Fehllesungen von Marken auf den Objekten.

Prinzipiell kann mit den Codelesern zwar die Qualität von Lesevorgängen von Marken erfasst werden. Ein wesentliches Problem besteht jedoch hierbei darin, dass keine Aussage getroffen werden kann, ob die Fehllesung durch einen Defekt der Marke oder durch eine Beeinträchtigung der Sensorfunktion des Codelesers bedingt ist.

Die EP 3 667 445 A1 betritt ein Verfahren und eine Vorrichtung zur Herstellung eines Produktes sowie ein Computerprogrammprodukt. Das Produkt wird hierbei in zumindest einem Produktionsschritt hergestellt. Optional erfolgt nach zumindest einem der Produktionsschritte eine Qualitätskontrolle zur Ermittlung eines Qualitätsindex des jeweiligen Produktes. Um die Qualitätskontrolle einzusparen, erfolgt eine Bestimmung eines Qualitätsindikators des jeweiligen Produktes anhand von Produktionsdaten. Die Produktionsdaten werden vorteilhaft von Sensoren bereitgestellt. Die Berechnung des Qualitätsindikators des jeweiligen Produktes erfolgt vorzugsweise mit Hilfe eines lernfähigen Algorithmus. Der lernfähige Algorithmus kann mit Qualitätsindices von einer Qualitätskontrolleinheit und den entsprechenden Produktionsdaten angelernt und/oder verbessert werden. Das Anlernen des lernfähigen Algorithmus erfolgt vorzugsweise mit Hilfe einer weiteren Recheneinheit, insbesondere in einer Cloud.

Die DE 10 2018 100 424 A1 betrifft ein Verfahren zur Steuerung und/oder Überwachung eines Prozessablaufs in einer Maschine zum Bearbeiten eines Werkstücks, mit folgenden Schritten:
- Empfangen von mehreren Eingangssignalen aus zumindest teilweise unbekannten Quellen,
- Übermitteln der Eingangssignale zu einer Eingangsdatenerkennungseinheit und zu einer System-Verarbeitungseinheit,
- Analyse der Eingangssignale durch die Eingangsdatenerkennungseinheit und Identifizieren mehrerer in den Eingangssignalen vorhandenen, sich zeitlich ändernden, den Prozessablauf in der Maschine beschreibenden Prozessablaufsignale,
- Erzeugen wenigstens eines Prozessablaufdatensatzes anhand der Prozessablaufsignale,
- Prüfen, ob der Prozessablaufdatensatz identifizierbar ist, wobei der Prozessablaufdatensatz identifizierbar ist, wenn er einem Musterdatensatz entspricht oder ähnelt,
- Zuordnen des identifizierten Prozessablaufdatensatzes zu einer aktuellen Verarbeitungsschrittfolge durch Vergleich des identifizierten Prozessablaufdatensatzes mit vorgegebenen Vergleichsdaten,
- Übermitteln der aktuellen Verarbeitungsschrittfolge an die System-Verarbeitungseinheit und
- Erzeugen wenigstens eines Echtzeitausgangssignals aus einem oder mehreren der Eingangssignale mittels der aktuellen Verarbeitungsschrittfolge in der System-Verarbeitungseinheit.

Die EP 3 179 434 A1 betrifft ein System zum Erzeugen einer kontextbewussten Empfehlung für einen Zielbenutzer und ein Zielelement basierend auf einem latenten Kontext, umfassend:
- eine Datensammeleinheit, die konfiguriert ist, um Rohsensordaten zu sammeln;
- ein Sensordatenmerkmalsextrator, der konfiguriert ist, Merkmale aus den Rohsensordaten zu extrahieren;
- ein Extraktor für latente Inhalte, der konfiguriert ist, um latenten Kontext aus dem Merkmal zu extrahieren;
- ein Datenabgleicher, der konfiguriert ist, alle gesammelten Informationen zusammenzuführen, um ein Bewertungsmodell zu erzeugen;
- eine Latentkontextmatrixfaktorisierungskomponente, die konfiguriert ist, um als eine Eingabe das Bewertungsmodellschema zu empfangen und ein Empfehlungsmodell zu erzeugen; und
- einen Modellauswerter, der konfiguriert ist, die erzeugte Modellgenauigkeit auszuwerten.

Der Erfindung liegt die Aufgabe zugrunde, eine Sensoranordnung mit hoher Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem oder mehreren Sensoren, mit einem oder mehreren jeweils ein Objekt kennzeichnenden Betriebsmitteln und mit einer Verarbeitungseinheit, die über eine Kommunikationsverbindung mit dem oder den Sensoren verbunden ist, wobei jeder Sensor ausgebildet ist, ein Betriebsmittel zu lesen und eindeutig zu identifizieren. In jedem Sensor werden als Sensordaten der Zeitpunkt einer Erfassung eines Betriebsmittels, die Betriebsmittelidentifikation des Betriebsmittels, eine den Sensor eindeutig identifizierende Sensoridentifikation und eine für die Erfassung des Betriebsmittels ermittelte zeit-, sensor- und betriebsmittelabhängige Qualitäts-Kennzahl *q(t, s, b)* an die Verarbeitungseinheit übermittelt. Mittels eines in der Verarbeitungseinheit implementierten Matrix-Faktorierungsalgorithmus werden aus gemessenen Qualitäts-Kennzahlen *q(t, s, b)* Sensor-Qualitätswerte *q(t, s)* und Betriebsmittel-Qualitätswerte *q(t,b)* separiert.

Die Erfindung betrifft weiterhin ein entsprechendes Verfahren.

Die erfindungsgemäße Sensoranordnung umfasst einen, besonders vorteilhaft jedoch mehrere Sensoren. Mit dem oder den Sensoren können Betriebsmittel erfasst werden, die auf Objekten angeordnet sind. Mit dem oder jedem Sensor kann ein Betriebsmittel gelesen und eindeutig identifiziert werden, wodurch auch das mit dem Betriebsmittel gekennzeichnete Objekt eindeutig identifiziert werden kann.

Die Sensoranordnung kann somit besonders vorteilhaft in einer Anlage, wie zum Beispiel einer Produktionslinie eingesetzt werden. Die Sensoren der Sensoranordnung sind dann verteilt über die Anlage beziehungsweise die Produktionslinie verteilt angeordnet. Anhand der von den Sensoren erfassten Betriebsmitteln ist eine Objektverfolgung möglich. Zudem können abhängig von den mit den Sensoren erfassten Betriebsmitteln Arbeits- oder Produktionsvorgänge vorgegeben, geändert, kontrolliert und überwacht werden.

Generell ist den Sensoren der Sensoranordnung eine Verarbeitungseinheit zugeordnet, wobei die Sensoren mit der Verarbeitungseinheit über eine Kommunikationsverbindung verbunden sind. Bei Einsatz der Sensoranordnung in einer Anlage ist auch die Anlagensteuerung der Anlage über die Kommunikationsverbindung mit der Verarbeitungseinheit und den Sensoren verbunden.

Die Kommunikationsverbindung kann generell leitungsgebunden oder berührungslos arbeitend ausgebildet sein. Prinzipiell kann die Kommunikationsverbindung von einem Bussystem gebildet sein. Insbesondere kann die Kommunikationsverbindung von einer OPC UA (open platform communications unified architecture) Architektur gebildet sein.

Die Betriebsmittel sind besonders vorteilhaft von Marken gebildet, die vorteilhaft von Sensoren in Form von optischen Sensoren gelesen und identifiziert werden können.

Die Marken können generell von spezifischen geometrischen und/oder reflektierenden Objektstrukturen gebildet sein.

Besonders vorteilhaft sind die Marken von auf den Objekten aufgebrachten Codes gebildet. Insbesondere können die Codes als 1D-Barcodes, 2D-Barcodes oder Stacked Codes, das heißt eindimensionale gestapelte Strichcodes ausgebildet sein.

Dementsprechend können die optische Sensoren als Codeleser ausgebildet sein, die als scannende oder kamerabasierte Sensoren ausgebildet sein können.

Vorteilhaft ist die Verarbeitungseinheit in einer Anlagensteuerung der Anlage integriert oder in einer der Anlage zugeordneten Rechnereinheit integriert.

Alternativ ist die Verarbeitungseinheit in einer Cloud integriert oder in einem Virtualisierungs-Container realisiert.

Bei einem Virtualisierungs-Container handelt es sich um ein System, bei welchem mehrere Instanzen eines Betriebssystems isoliert voneinander den Kanal eines Hostsystems nutzen.

Schließlich ist es möglich, dass die Verarbeitungseinheit in einem der Sensoren integriert ist.

Erfindungsgemäß werden von jedem Sensor der Sensoranordnung als Sensordaten nicht nur eine Betriebsmittelidentifikation anhand eines gelesenen Betriebsmittels sondern auch eine Sensoridentifikation, die den Sensor eindeutig identifiziert, und auch eine Qualitäts-Kennzahl *q(t, s, b),* die bei Lesen eines Betriebsmittels ermittelt wird, an die Verarbeitungseinheit übermittelt.

Die Qualitäts-Kennzahl *q(t, s, b)* ist zeitabhängig und abhängig vom Sensor, der das Betriebsmittel liest und vom Betriebsmittel selbst.

Diese Qualitäts-Kennzahl *q(t, s, b)* umfasst Eigenschaften der Betriebsmittel, das heißt Codes, insbesondere dessen Reflektivität, den Kontrast des Betriebsmittels, die Anzahl von Lesevorgängen des Sensors, die zur Erfassung der Betriebsmittel notwendig sind, gegebenenfalls notwendige Fehlerkorrekturen bei Auswerten von Lesevorgängen oder davon abgeleitete Größen.

Erfindungsgemäß werden mittels eines Matrix-Faktorierungsalgorithmus aus der Qualitäts-Kennzahl *q(t, s, b)* ein Sensor-Qualitätswert *q*(*t, s*) und ein Betriebsmittel-Qualitätswert *q(t, b)* gewonnen, das heißt es werden für den Sensor und das Betriebsmittel separate Qualitätswerte gewonnen. Damit wird erfindungsgemäß erreicht, dass die Qualitäten der Sensoren einerseits und der Betriebsmittel andererseits einzeln und unabhängig voneinander erfasst werden können. Dies führt zu einer erheblichen Erweiterung der Funktionalität der Sensoranordnung, da unmittelbar bei mit den Sensoren durchgeführten Lesevorgängen von Betriebsmitteln die Qualität und damit die aktuelle Funktionsfähigkeit der Sensoren und Betriebsmittel unabhängig voneinander erfasst werden kann.

Die Sensor-Qualitätswerte und die Betriebsmittel-Qualitätswerte können einem Benutzer angezeigt werden, wobei insbesondere auch der zeitliche Verlauf dieser Qualitätswerte angezeigt werden kann. Damit kann der Benutzer alle Komponenten der Sensoranordnung separat visuell prüfen.

Des Weiteren können die Qualitätswerte zur Durchführung von Kontroll- oder Steuerfunktionen der Sensoranordnung und insbesondere einer mit der Sensoranordnung überwachten Anlage genutzt werden. Vorteilhaft hierbei ist, dass diese Kontrollfunktionen oder Steuerfunktionen automatisiert durchgeführt werden, wobei diese unmittelbar nach Ermitteln der Qualitätswerte eingeleitet werden können.

Vorteilhaft wird für den Matrix-Faktorierungsalgorithmus eine Matrix *Mᵢⱼ* gebildet, wobei ein Index i oder j die Sensoren der Sensoranordnung kennzeichnet und der andere Index j oder i die Betriebsmittel der Sensoranordnung kennzeichnet. In einem Einmessvorgang werden für die Matrix *Mᵢⱼ* Qualitäts-Kennzahlen *qᵢⱼ* mit den Sensoren der Sensoranordnung ermittelt. Ein Ansatz für die Abhängigkeit der Qualitäts-Kennzahlen von den Sensor-Qualitätswerten *q*(*t*, *s*) und den Betriebsmittel-Qualitätswerten *q(t, b)* entsprechenden Variablen *qₛ*, *q_{b}* wird in Form einer Funktion *f*(*qₛ*, *q_{b}*) gewählt. Die Funktionswerte dieser Funktion werden an die im Einmessvorgang ermittelten Matrixwerte Qualitäts-Kennzahlen *qᵢⱼ* angepasst.

Bei dem Matrix-Faktorierungsalgorithmus wird ein Ansatz für die Abhängigkeit der messbaren Qualitäts-Kennzahlen von den Sensor- beziehungsweise Betriebsmittel-Faktoren in Form von versteckten, das heißt nicht messbaren Variablen *qₛ*, *q_{b}* angesetzt. Allgemein kann dieser Zusammenhang in Form einer Funktion *f*(*qₛ*, *q_{b}*) vorgegeben werden, wobei diese Funktion im einfachsten Fall aus dem Produkt *qₛ* · *q_{b}* besteht.

Da die Sensoranordnung allgemein eine Anordnung von I Sensoren und J Betriebsmitteln aufweist und mit der bei der Sensoranordnung jeder Sensor jedes Betriebsmittels erfassen kann und für jede Kombination die Messung einer Qualitäts-Kennzahl ermittelt werden kann, ergibt sich eine Matrix *qᵢⱼ* von Qualitäts-Kennzahlen.

Während einer vorgegebenen Messzeit während des Betriebs der Sensoranordnung zur Überwachung einer Anlage werden die Messwerte *qᵢⱼ*(*t*,*s*,*b*) bestimmt. Je nachdem wie die mit den Betriebsmitteln gekennzeichneten Objekte entlang der Anlage geführt werden, werden bestimmte Betriebsmittel mit einzelnen Sensoren einfach, mehrfach oder gar nicht erfasst. Demzufolge werden für die einzelnen Matrixwerte *qᵢⱼ* ein, oder kein Messwert, oder auch mehrere Messwerte erhalten.

Die Funktion *f*(*qₛ*, *q_{b}*) wird dann so angepasst, dass eine bestmögliche Anpassung oder auch mehrere Anpassungen an die Messwerte *qᵢⱼ* gegeben ist. Hierzu können gängige Optimierungsverfahren wie zum Beispiel die Methode der kleinsten Fehlerquadrate eingesetzt werden. Insbesondere bei hochdimensionalen Matrizen *qᵢⱼ* werden vorteilhaft KI (Künstliche Intelligenz)-Algorithmen eingesetzt.

Mit derartigen Matrix-Faktorierungsalgorithmen werden für die Qualitäts-Kennzahlen die versteckten Variablen *qₛ*, *q_{b}* bestimmt, das heißt es erfolgt eine Separation der Qualitäts-Kennzahlen *q(t, s, b)* in Sensor-Qualitätswerte *q(t, s)* und Betriebsmittel-Qualitätswerte *q(t, b).*

Die Konstruktion der Verarbeitungseinheit ist an diese Berechnungen vorteilhaft derart angepasst, dass die Verarbeitungseinheit eine Datenerfassungseinheit zur Speicherung von Sensordaten und eine Berechnungseinheit zur Berechnung der Qualitätswerte *q(t, s), q(t, b)* aufweist.

Zweckmäßig werden in der Berechnungseinheit aus den Qualitätswerten *q(t, s), q(t, b)* abgeleitete Kenngrößen berechnet.

Gemäß einer vorteilhaften Ausgestaltung ist der Verarbeitungseinheit eine Bedieneinheit zugeordnet, welche zur Eingabe von Eingabegrößen und zur Ausgabe von Ausgabegrößen ausgebildet ist.

Dabei können an der Bedieneinheit Sensor-Qualitätswerte *q(t, s)* und Betriebsmittel-Qualitätswerte *q(t, b)* und/oder daraus abgeleitete Kenngrößen angezeigt werden.

Insbesondere wird an der Berechnungseinheit der zeitliche Verlauf von Qualitätswerten *q(t, s), q(t, b)* und/oder daraus abgeleiteten Kenngrößen visualisiert.

Über die Bedieneinheit können Eingabegrößen eingegeben werden, um eine Auswahl von angezeigten Qualitätswerten oder Kenngrößen zu treffen.

Vorteilhaft weist die Bedieneinheit eine Internet-Schnittstelle auf.

Damit wird ein internetfähiges Anzeigesystem bereitgestellt.

Gemäß einer vorteilhaften Ausführungsform wird zu einem vorgegebenen Beobachtungszeitintervall T für jeden Sensor ein Tauglichkeitswert *h*(*T, s*) ermittelt, der angibt, mit welcher Wahrscheinlichkeit der an diesem Sensor ermittelte Sensor-Qualitätswert *q*(*t*,*s*) oberhalb eines Schwellwerts *Sₛ* liegt. Weiterhin wird für jedes Betriebsmittel ein Tauglichkeitswert *h(T, b)* ermittelt, der angibt, mit welcher Wahrscheinlichkeit der für dieses Betriebsmittel ermittelte Betriebsmittel-Qualitätswert *q(t, b)* oberhalb eines Schwellwerts *S_{b}* liegt.

Dabei können durch Eingabe von Eingabegrößen in die Bedieneinheit die Sensoren und/oder Betriebsmittel für die Tauglichkeitswerte *h(T, s), h(T, b)* ermittelt werden, ausgewählt werden und/oder Beobachtungsintervalle T und/oder Schwellwerte als Parameter vorgegeben werden.

Generell können die Schwellwerte auch mittels KI (Künstlicher Intelligenz)-Algorithmen während des Betriebs der Sensoranordnung optimiert werden.

Die Tauglichkeitswerte *h*(*T, s*) liefern ein zuverlässiges Maß für die Betriebstauglichkeit der Sensoren. Separat und unabhängig hierzu liefern die Tauglichkeitswerte *h*(*T, b*) ein ebenso zuverlässiges Maß für die Betriebstauglichkeit der Betriebsmittel, insbesondere des Codes. Insbesondere können aus Tauglichkeitswerte *h*(*T, s*)*, h*(*T, b*) Reststandszeiten von Sensoren und/oder Betriebsmitteln bestimmt werden.

Durch Anzeige der Tauglichkeitswerte bekommt ein Benutzer einen Überblick über die Betriebstauglichkeit aller Komponenten der Sensoranordnung.

Besonders vorteilhaft werden aus einem Vergleich von Tauglichkeitswerten *h(T, s), h(T, b)* Verbesserungspotentiale bestimmt.

Diese Verbesserungspotentiale werden dadurch bestimmt, dass der beste Tauglichkeitswert als Referenz genommen wird und dann für alle anderen Tauglichkeitswerte die Differenz mit dieser Referenz gebildet wird. Je größer die Differenz, desto größer ist das Verbesserungspotential für den betreffenden Sensor oder das betreffende Betriebsmittel. Der Benutzer kann dies dazu nutzen, Reparaturen, Wartungen oder sogar ein Austausch von Sensoren oder Betriebsmitteln mit hohem Verbesserungspotential vorzunehmen, um diese durch neue Sensoren beziehungsweise Betriebsmittel zu ersetzen.

Weiter vorteilhaft werden aus Tauglichkeitswerten *h(T, s*)*, h(T, b*) Reproduzierbarkeitswerte bestimmt.

Hierzu werden insbesondere die statischen Streuungen (Standardabweichungen) der Tauglichkeitswerte ermittelt. Je kleiner die Streuung desto besser ist die Reproduzierbarkeit.

Gemäß einer vorteilhaften Ausführungsform werden aus Tauglichkeitswerten *h(T, s*)*, h(T, b*) Handlungsanweisungen bestimmt.

Die Handlungsanweisungen können in der Verarbeitungseinheit in maschinenlesbare Kommandos übersetzt werden und automatisch ausgeführt werden. Damit kann in einem automatischen Prozess die Betriebstauglichkeit der Sensoranordnung kontinuierlich verbessert werden.

Insbesondere können auch die Verbesserungspotentiale zur Generierung von Handlungsanweisungen verwendet werden. Hierzu kann vorzugsweise eine Bereichseinteilung der Verbesserungspotentiale durchgeführt werden.

Liegt ein Verbesserungspotential in einem niedrigen Bereich, besteht kein Handlungsbedarf, da der entsprechende Sensor oder das Betriebsmittel vollständig oder nahezu vollständig, betriebstauglich ist.

Liegt ein Verbesserungspotential zum Beispiel für einen Sensor in einem mittleren Bereich, so kann die Handlungsanweisung generiert werden, dass der Sensor gereinigt oder ausgerichtet werden muss.

Liegt ein Verbesserungspotential in einem hohen Bereich, kann eine Handlungsanweisung darin bestehen, den betreffenden Sensor oder das Betriebsmittel auszutauschen.

Gemäß einer weiteren vorteilhaften Ausführungsform werden aus Tauglichkeitswerten *h*(*T, s*)*, h*(*T, b*) maschinenlesbare Steuerkommandos generiert.

Die Steuerkommandos können der Anlagensteuerung der Anlage zugeführt werden, insbesondere dort vorgesehenen MES- oder ERP-Systemen, um so abhängig von ermittelten Tauglichkeitswerten die Anlage zu steuern.

Weiter vorteilhaft werden aus Tauglichkeitswerten *h(T, s), h(T, b)* Parametrierungsanweisungen für Sensoren generiert.

Hierzu ist in den Sensoren eine geeignete Software implementiert, mit der die Parametrierungsanweisungen direkt umgesetzt werden, um den Sensor entsprechend zu parametrieren.

Eine Änderung der Parameterwerte wird insbesondere für Sensoren mit hohen Verbesserungspotentialen durchgeführt, um deren Betriebstauglichkeit zu verbessern.

Zweckmäßig werden die Parametrierungsanweisungen nur an solche Sensoren übertragen, welche hinsichtlich ihrer Funktionalität den Sensoren entsprechen, aus deren Tauglichkeitswerte die Parametrierungsanweisungen gewonnen werden.

Dadurch werden Fehlparametrierungen von Sensoren ausgeschlossen.

Gemäß einer vorteilhaften Weiterbildung werden für Sensoren einer Anlage ermittelte Parametrierungsanweisungen an Sensoren einer anderen Anlage übertragen.

Damit kann anlagenübergreifend eine selbsttätige Parametrierung von Sensoren durchgeführt werden.

Gemäß einer vorteilhaften Ausführungsform weist die Sensoranordnung mehrere, an unterschiedlichen Orten vorgesehene Sensoren auf und in der Verarbeitungseinheit wird eine Weganalyse eines Betriebsmittels entlang der Sensoren durchgeführt.

Dadurch kann einerseits der Weg eines Betriebsmittels durch eine Anlage verfolgt werden. Weiterhin kann analysiert werden, von welchen Sensoren das Betriebsmittel auf seinem Weg detektiert wird.

Besonders vorteilhaft wird für jedes Betriebsmittel eine Weganalyse derart durchgeführt, dass innerhalb eines vorgegebenen Zeitintervalls eine zeitliche Abfolge erstellt wird, von welchen Sensoren das Betriebsmittel erfasst wurde, wobei aus der zeitlichen Abfolge ein Weg erstellt wird, der aus einzelnen Wegabschnitten besteht, die aus Paaren von Sensoren bestehen, die jeweils nacheinander das Betriebsmittel erfasst haben.

Dabei wird zu jedem Wegabschnitt des Wegs eines Betriebsmittels die absolute Häufigkeit ermittelt, mit der dieser Wegabschnitt in dem Zeitintervall durchlaufen wurde.

Als Resultat werden die Wege und/oder die Häufigkeiten von Wegabschnitten visualisiert.

Dadurch kann analysiert werden, wo sich ein Betriebsmittel im Lauf der Zeit befunden hat und welche Wege besonders häufig oder selten genommen werden. Zudem kann analysiert werden, welche Sensoren besonders häufig oder selten im Einsatz zur Betriebsmittelerfassung sind. Schließlich können ungleichmäßige Auslastungen aufgefunden werden. Abhängig hiervon kann der Betrieb einer Anlage dahingehend optimiert werden, dass sie eine gleichmäßigere Auslastung aufweist, wodurch eine höhere Kapazität der Anlage erzielt werden kann.

Gemäß einer vorteilhaften Weiterbildung der Erfindung werden aus den Qualitäts-Kennzahlen neben den Sensor-Qualitätswerten *q(t,s)* und Betriebsmittel-Qualitätswerten *q*(*t, b*) weitere Messgrößen separiert.

Ein Beispiel hierfür ist die Erfassung von Umgebungslicht oder Störlicht. Derartige zusätzliche Lichteinstrahlungen ändern die Empfangspegel der Sensoren, das heißt diese Einflüsse können durch Sensorsignale der Sensoren selbst erfasst werden.

Um diese Einflussgrößen von den Sensor-Qualitätswerten *q*(*t, s*) und den Betriebsmittel-Qualitätswerten *q*(*t, b*) zu separieren, kann der Matrix-Faktorierungsalgorithmus dahingehend erweitert werden, dass neben den versteckten Variablen *qₛ*, *q_{b}* für die Sensor- beziehungsweise Betriebsmitteleinflüsse eine weitere versteckte Variable *qᵤ* für die Umwelteinflüsse durch Lichteinstrahlungen eingeführt wird.

Alternativ oder zusätzlich sind Umweltsensoren zur Erfassung weiterer Messgrößen vorgesehen.

Beispiele für derartige Umweltsensoren sind Sensormittel zur Erfassung der Sensortemperatur oder der Umgebungstemperatur. Weiterhin können Sensormittel zur Erfassung von Vibrationen oder Luftfeuchtigkeit vorgesehen sein. Schließlich können auch die Winkellagen der Abtastungen von Betriebsmitteln, die mit den Sensoren durchgeführt werden, erfasst werden.

Generell sind die weiteren Messgrößen mit den Sensor-Qualitätswerten *q*(*t, s*) und den Betriebsmittel-Qualitätswerten *q*(*t, b*) verknüpfbar.

Auch diese zusätzlichen Messgrößen können visualisiert werden. Auch können für diese Messgrößen Tauglichkeitswerte beziehungsweise Verbesserungspotentiale bestimmt werden.

Die Erfindung wird im Folgenden anhand der Zeichnungen erläutert. Es zeigen:
- Figur 1:: Schematische Darstellung eines Ausführungsbeispiels der erfindungsgemäßen Sensoranordnung.
- Figur 2:: Blockschaltbild der Sensoranordnung gemäß Figur 1.
- Figur 3:: Erste Variante einer Ergänzung zur Sensoranordnung gemäß Figur 2.
- Figur 4:: Zweite Variante einer Ergänzung zur Sensoranordnung gemäß Figur 2.
- Figur 5:: Diagramm mit Tauglichkeitswert für die Sensoranordnung gemäß den Figuren 1 und 2.
- Figur 6:: Diagramm mit Verbesserungspotential für die Sensoranordnung gemäß den Figuren 1 und 2.
- Figur 7:: Beispiel einer Weganalyse für die Sensoranordnung gemäß den Figuren 1 und 2.
- Figur 8:: Darstellung eines Bereichs von Winkelpositionen für einen Sensor der Sensoranordnung gemäß den Figuren 1 und 2.
- Figur 9a:: Darstellung von Winkelpositionen für Sensoren der Sensoranordnung gemäß den Figuren 1 und 2.
- Figur 9b:: Korrelation der Winkelpositionen gemäß Figur 8a mit Qualitätswert.
- Figur 10:: Beispiel einer OEE (overall equipment effectiveness) Berechnung für einen Sensor der Sensoranordnung gemäß den Figuren 1 und 2.

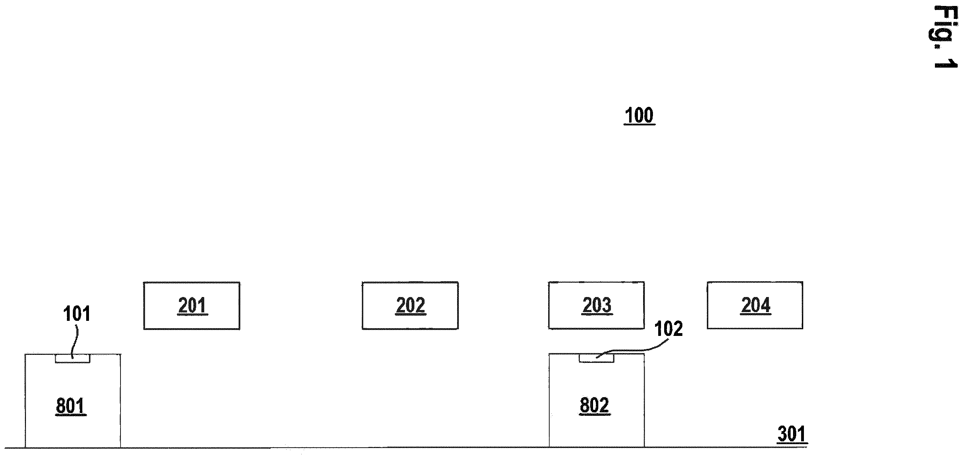

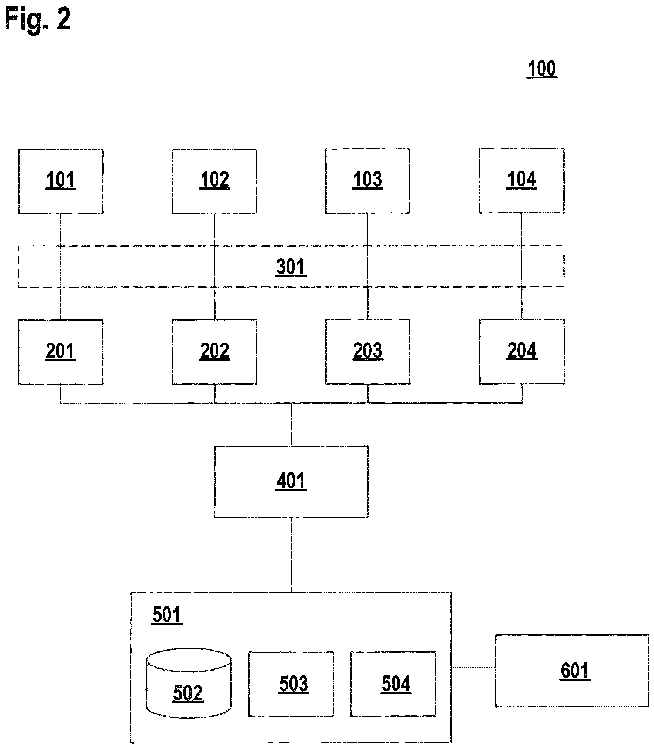

Figur 1 zeigt schematisch ein Ausführungsbeispiel der erfindungsgemäßen Sensoranordnung 100. Figur 2 zeigt ein Blockschaltbild dieser Sensoranordnung 100.

Die Sensoranordnung 100 umfasste eine Anordnung von Sensoren 201 - 204, die im vorliegenden Fall von optischen Sensoren in Form von Codelesern gebildet sind. Die Codeleser können in Form von Scannern oder von Kamerasensoren ausgebildet sein. Die Sensoren 201 - 204 sind an vorgegebenen Arbeitsstationen einer Produktionslinie 301 angeordnet. Entlang der Produktionslinie 301 werden Objekte 801, 802 gefördert, mit denen Arbeitsvorgänge durchgeführt werden oder welche zur Durchführung von Arbeitsvorgängen benötigt werden. Jedes Objekt 801, 802 ist mit einem Betriebsmittel 101 - 104 in Form eines Codes eindeutig gekennzeichnet. Befindet sich ein Objekt 801, 802 im Lesebereich eines Sensors 201 - 204, kann der dort aufgebrachte Code gelesen werden.

Die Topologie der Sensoranordnung 100 sowie die Anzahlen der Sensoren 201 - 204 und Betriebsmittel 101 - 104 sind natürlich nicht auf die Darstellungen der Figuren 1 und 2 begrenzt.

Wie Figur 2 zeigt, sind die Sensoren 201 - 204 über eine Kommunikationsverbindung 401 mit einer Verarbeitungseinheit 501 verbunden. Die Verarbeitungseinheit 501 umfasst eine Speichereinheit 502, eine Datenerfassungseinheit 503 und eine Berechnungseinheit 504. Vorteilhaft ist die Speichereinheit 502 in der Datenerfassungseinheit 503 integriert.

Die Verarbeitungseinheit 501 ist mit einer Bedieneinheit 601 verbunden, die zur Ein- und Ausgabe von Daten ausgebildet ist.

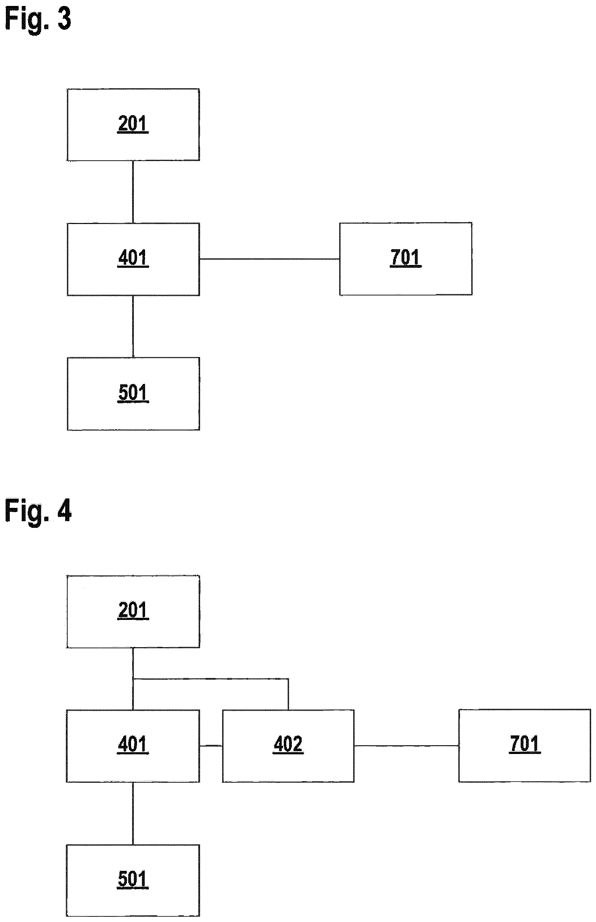

Die Figuren 3 und 4 zeigen zwei Varianten einer Erweiterung der Sensoranordnung 100 gemäß Figur 2 dahingehend, dass eine Anlagensteuerung 701 einer Anlage, die die Produktionslinie 301 steuert, eingebunden ist. Bei der Anordnung gemäß Figur 3 wird die Kommunikationsverbindung 401 zur Anbindung der Anlagensteuerung 701 genutzt. Bei der Anordnung gemäß Figur 4 ist als zweiter Kommunikationskanal eine Steuerungsverbindung 402 zur Anbindung der Anlagensteuerung 701 vorgesehen. Dieser zweite Kommunikationskanal verwendet eine eigene Hardware- oder Software-Schnittstelle, beispielsweise dadurch, dass er wie der erste Kommunikationskanal dieselbe Verbindung wie zum Beispiel Ethernet nutzt, wobei jedoch unterschiedliche Softwareverbindungen (Ports) genutzt werden.

Erfindungsgemäß werden bei Erfassen eines Betriebsmittels 101 - 104 mittels eines Sensors 201 - 204 sowohl die Betriebsmittelidentifikation als auch die eigene Sensoridentifikation und auch eine bei der Erfassung des Betriebsmittels 101 - 104 ermittelte Qualitäts-Kennzahl *q*(*t, s, b*) als Sensordaten an die Verarbeitungseinheit 501 übertragen und in der Speichereinheit 502 abgespeichert.

Die Qualitäts-Kennzahl *q*(*t, s, b*) ist eine zeitabhängige Größe und hängt sowohl von Parametern des Sensors 201 -204 als auch des gelesenen Betriebsmittels 101 - 104 ab.

Diese Qualitäts-Kennzahl *q*(*t, s, b*) umfasst Eigenschaften der Betriebsmittel 101 - 104, das heißt Codes, insbesondere deren Reflektivität, den Kontrast der Betriebsmittel 101 - 104, die Anzahl von Lesevorgängen des Sensors 201 - 204, die zur Erfassung der Betriebsmittel 101 - 104 notwendig sind, gegebenenfalls notwendige Fehlerkorrekturen bei Auswerten von Lesevorgängen oder davon abgeleitete Größen.

Erfindungsgemäß werden in der Verarbeitungseinheit 501 mittels eines Matrix-Faktorierungsalgorithmus aus der Qualitäts-Kennzahl *q*(*t, s, b*) ein Sensor-Qualitätswert *q*(*t*, *s*) und ein Betriebsmittel-Qualitätswert *q*(*t, b*) gewonnen, das heißt es werden für jeden Sensor 201 - 204 und jedes Betriebsmittel 101 - 104 separate Qualitätswerte gewonnen. Damit wird erfindungsgemäß erreicht, dass die Qualitäten der Sensoren 201 - 204 einerseits und der Betriebsmittel 101 - 104 andererseits einzeln und unabhängig voneinander erfasst werden können.

Die Sensor-Qualitätswerte *q*(*t, s*) und die Betriebsmittel-Qualitätswerte *q*(*t, b*) können mittels der Bedieneinheit 601 einem Benutzer angezeigt werden, wobei insbesondere auch der zeitliche Verlauf dieser Qualitätswerte angezeigt werden kann.

Weiterhin wird zu einem vorgegebenen Beobachtungszeitintervall T für jeden Sensor 201 - 204 ein Tauglichkeitswert *h*(*T, s*) ermittelt, der angibt, mit welcher Wahrscheinlichkeit der an diesem Sensor 201 - 204 ermittelte Sensor-Qualitätswert *q*(*t, s*) oberhalb eines Schwellwerts *Sₛ* liegt. Zudem wird für jedes Betriebsmittel 101 - 104 ein Tauglichkeitswert *h*(*T, b*) ermittelt, der angibt, mit welcher Wahrscheinlichkeit der für dieses Betriebsmittel 101 - 104 ermittelte Betriebsmittel-Qualitätswert *q*(*t, b*) oberhalb eines Schwellwerts *S_{b}* liegt.

Über die Bedieneinheit 601 kann ein Benutzer als Parameter das Beobachtungszeitintervall und die Schwellwerte *Sₛ*, *S_{b}* vorgeben.

Die Tauglichkeitswerte geben ein Maß für die Betriebstauglichkeit der Sensoren 201 - 204 und Betriebsmittel 101 - 104 an.

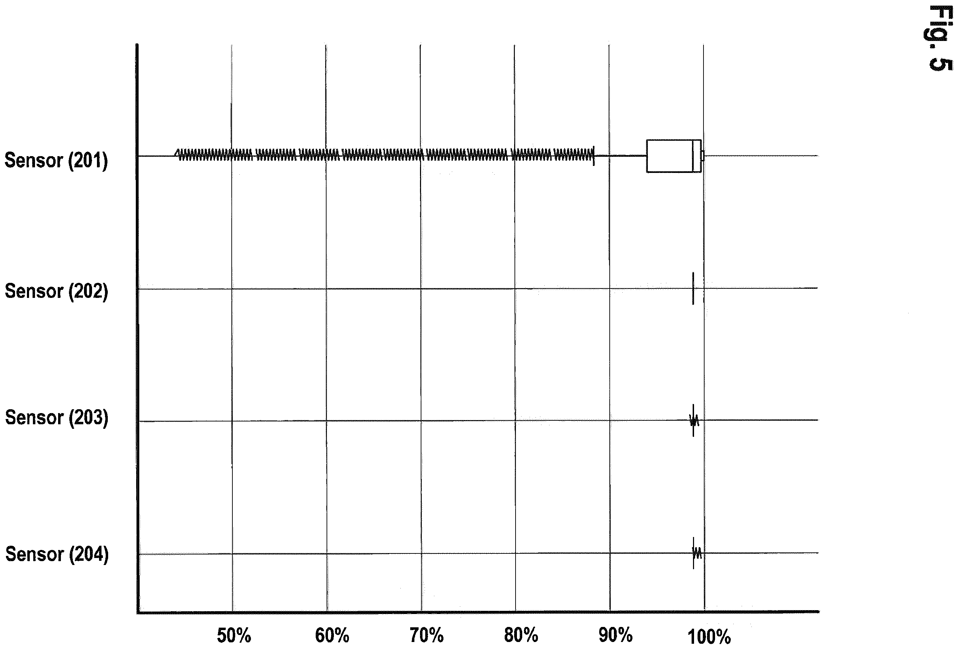

Figur 5 zeigt beispielhaft derartige Tauglichkeitswerte für die Sensoren 201 - 204. Die Tauglichkeitswerte sind auf Werte von 0 % bis 100 % normiert, wobei der Wert 100 % einer vollständigen, uneingeschränkten Betriebstauglichkeit und der Wert 0 % einer völlig unzureichenden Betriebstauglichkeit entspricht.

Wie Figur 5 zeigt, weist der Sensor 201 den niedrigsten Tauglichkeitswert und der Sensor 204 den höchsten Tauglichkeitswert auf.

Diese Tauglichkeitswerte können an der Bedieneinheit 601 visualisiert werden.

Aus den Tauglichkeitswerten können Verbesserungspotentiale abgeleitet werden. Hierzu wird der höchste Tauglichkeitswert als Referenz genommen und für die restlichen Tauglichkeitswerte die Differenz mit dieser Referenz gebildet.

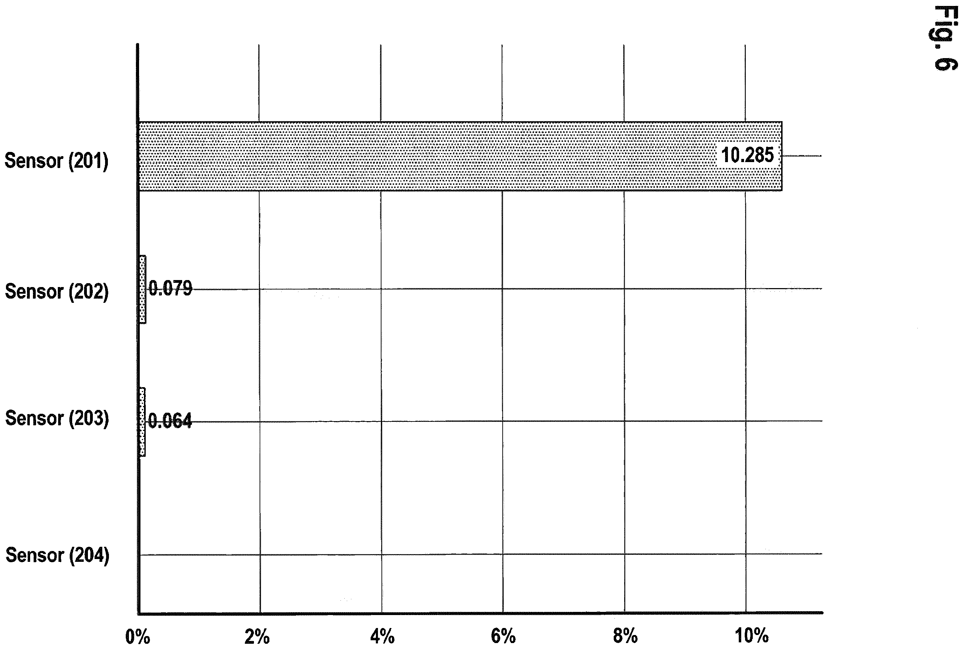

Figur 6 zeigt das Ergebnis der aus den Tauglichkeitswerten gemäß Figur 5 abgeleiteten Verbesserungspotentiale. Der Sensor 204 weist den höchsten Tauglichkeitswert auf, der als Referenz dient. Damit werden für die Sensoren 201 - 203 die in Figur 6 dargestellten Verbesserungspotentiale erhalten, die ebenfalls mittels der Bedieneinheit 601 visualisiert werden können.

Wie aus Figur 6 ersichtlich, weist der Sensor 201 ein hohes Verbesserungspotential auf. Dies signalisiert dem Benutzer einen Handlungsbedarf, beispielsweise derart, dass der Sensor 201 ausgetauscht werden muss. Die weiteren Sensoren 202, 203 weisen geringe Verbesserungspotentiale auf, so dass diese ohne weitere Maßnahmen weiter betrieben werden können.

Um ein Maß für die Reproduzierbarkeit der Tauglichkeitswerte beziehungsweise Verbesserungspotentiale zu generieren, kann auch die Streuung der Tauglichkeitswerte berechnet werden.

Aus den Tauglichkeitswerten können auch Handlungsanweisungen, insbesondere auch Steuerkommandos generiert werden, die in maschinenlesbarer Form an die Anlagensteuerung 701 übertragen werden können und dort direkt ausgeführt werden können.

Weiterhin können aus Tauglichkeitswerten für Sensoren 201 - 204 Parametrierungsanweisungen für diese oder ähnliche Sensoren abgeleitet werden.

Schließlich können aus Tauglichkeitswerten Reststandszeiten für Sensoren 201 - 204 bestimmt werden.

Für die Sensoranordnung 100 kann eine Weganalyse erstellt werden, die angibt, welche Betriebsmittel 101 - 104 zu welchen Zeiten von welchen Sensoren 201 - 204 erfasst werden. Die Ergebnisse derartiger Weganalysen können mittels der Bedieneinheit 601 visualisiert werden.

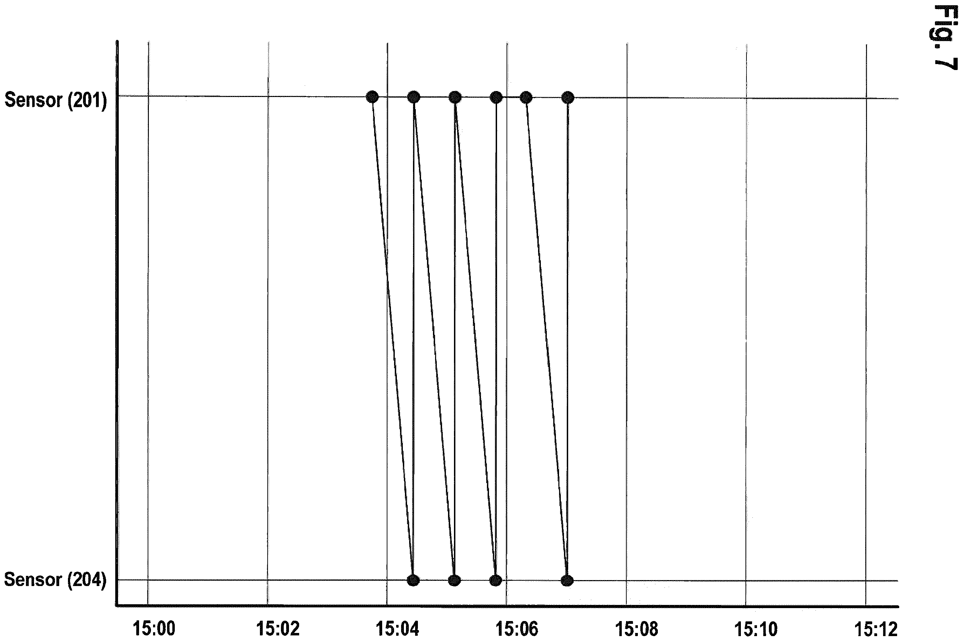

Figur 7 zeigt das Ergebnis für eine solche Weganalyse für eine Sensoranordnung 100 mit den Sensoren 201 - 204, für welche auch die Tauglichkeitswerte gemäß Figur 5 berechnet werden.

Figur 7 zeigt den Weg eines mit einem Betriebsmittel 101 gekennzeichneten Produkt durch die Anlage. Dabei ist der Weg des Betriebsmittels 101 in einem vorgegebenen Zeitintervall (hier von 15:00 Uhr bis 15:12 Uhr) aufgetragen.

Wie aus Figur 7 ersichtlich, wechselt das Betriebsmittel 101 in kurzer Zeit mehrfach zwischen den Sensoren 201 und 204, was auf ein Problem im Arbeitsprozess für das Produkt hindeutet. Weiterhin ist ersichtlich, dass die Sensoren 202, 203 überhaupt nicht verwendet werden, so dass für diese im beobachteten Zeitraum keine Auslastung vorhanden ist.

Der Matrix-Faktorierungsalgorithmus kann generell dahingehend erweitert sein, dass aus den messtechnisch ermittelten Qualitäts-Kennzahlen *q*(*t, s, b*) auch weitere Messgrößen präpariert werden können, beispielsweise Einflüsse durch Umgebungslicht.

Alternativ oder zusätzlich können Umweltsensoren wie zum Beispiel Temperatursensoren zur Erfassung weiterer Messgrößen vorgesehen sein.

Diese Messgrößen können mit den Sensor-Qualitätswerten und Betriebsmittel-Qualitätswerten korreliert werden.

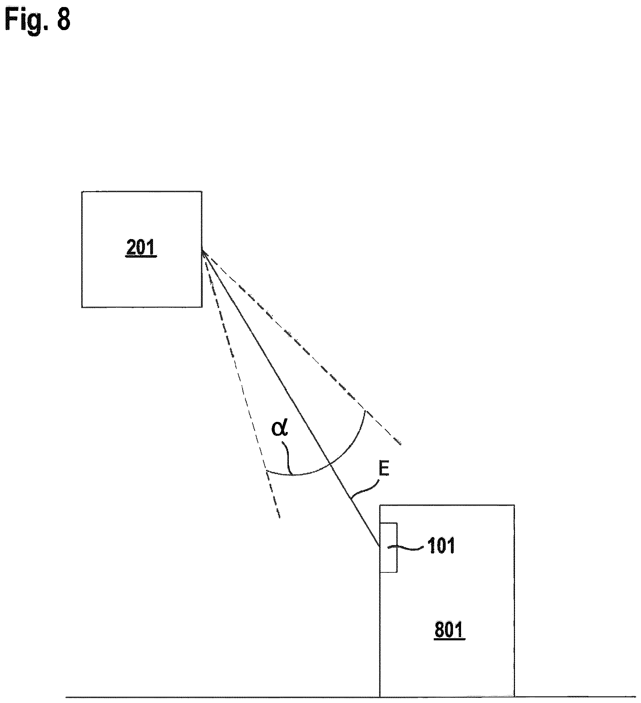

Ein Beispiel für eine derartige Messgröße ist die Winkelposition eines Betriebsmittels 101 innerhalb eines Scanstrahls E eines Sensors 201, wie schematisch in Figur 8 dargestellt. Die Winkelposition kann innerhalb des Winkelbereichs ∝ variieren.

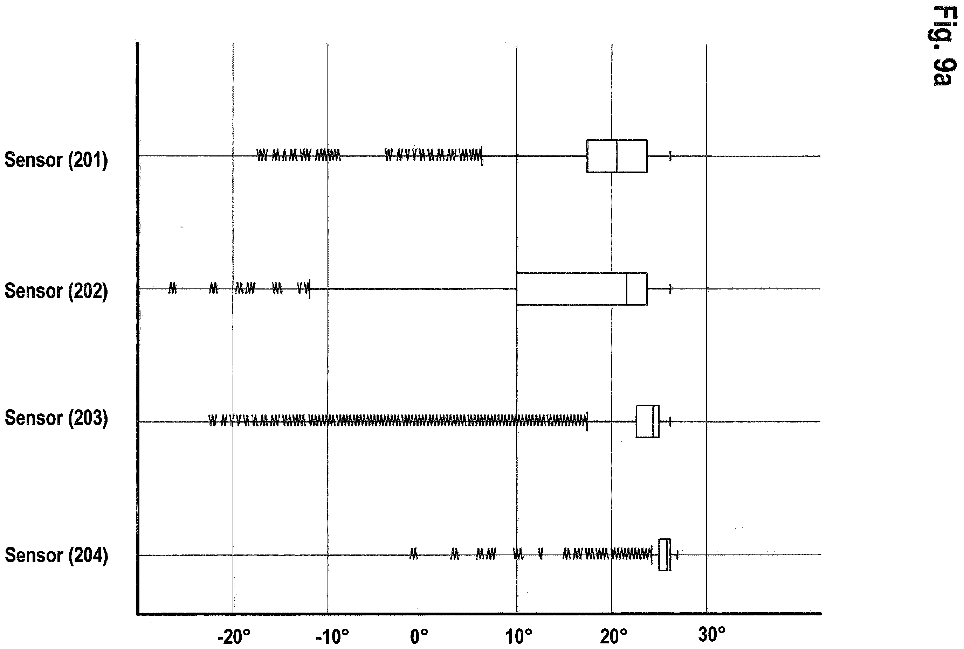

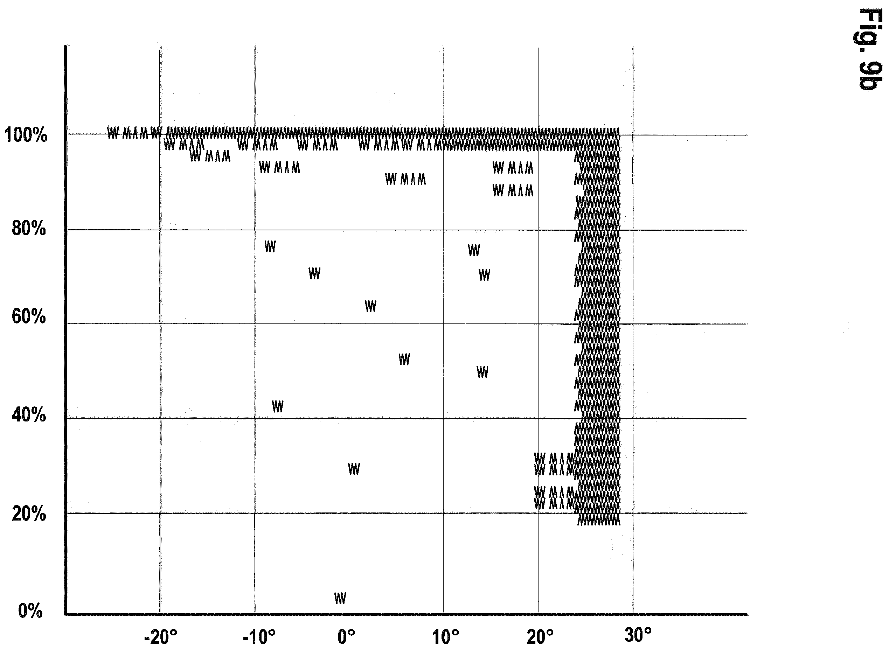

Figur 9a zeigt die Variation der Winkelpositionen. Diese Winkelpositionen können den entsprechenden Sensor-Qualitätswerten oder den Tauglichkeitswerten gegenübergestellt werden, um Unregelmäßigkeiten sichtbar zu machen. Das Ergebnis ist in Figur 9b dargestellt.

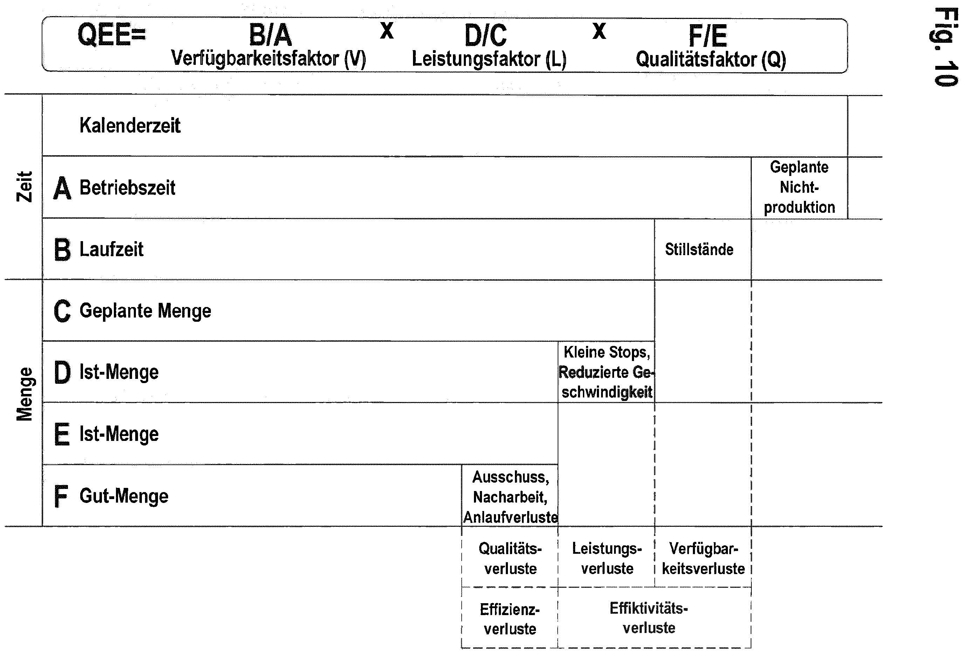

Wie in Figur 10 beispielhaft dargestellt, können die für die Sensoranordnung 100 ermittelten Sensor-Qualitätswerte *q*(*t, s*) und Betriebsmittel-Qualitätswerte *q*(*t, b*) sowie daraus abgeleitete Kenngrößen für komplexe Auswertungen wie KPI (Key performance indicator)-Auswertungen herangezogen werden, mittels derer OEE (overall equipment effectiveness)-Kennzahlen berechnet werden, die Maßzahlen für die Gesamtanlageneffektivität von Anlagen darstellen. Auch diese Auswertungen können an der Bedieneinheit 601 visualisiert werden.

Dabei stellt in Figur 10 F die Anzahl erfolgreicher Scans, das heißt erfolgreicher Lesungen während eines Beobachtungszeitraums A ( Betriebzeit) eines Betriebsmittels 101 - 104 durch einen Sensor 201 - 204 dar. D und E sind die Anzahl der insgesamt mit dem Sensor 201 - 204 während des Beobachtungszeitraums durchgeführten Scans. C ist eine Anwendereingabe und definiert eine Sollmenge pro Zeiteinheit hochgerechnet auf den Beobachtungszeitraum. Die Laufzeit B entspricht der Differenz des Beobachtungszeitraums minus des Zeitraums ohne Messungen des Sensors. Der Qualitätsfaktor F/E entspricht dem Tauglichkeitswert *h*(*t, s*) des Sensors 201 - 204, der für einen Schwellwert *Sₛ* berechnet wurde, wobei insbesondere *Sₛ* = 0 ist.

Daraus ergeben sich als Effizienzverluste Qualitätsverluste und als Effektivitätsverluste Leistungsverluste bedingt durch kleine Stopps oder reduzierte Geschwindigkeiten der Förderung von Produkten sowie Verfügbarkeitsverluste bedingt durch Stillstandzeiten der Anlage.

### Bezugszeichenliste

- (100): Sensoranordnung
- (101 - 104): Betriebsmittel
- (201 - 204): Sensoren
- (301): Produktionslinie
- (401): Kommunikationsverbindung
- (402): Steuerungsverbindung
- (501): Verarbeitungseinheit
- (502): Speichereinheit
- (503): Datenerfassungseinheit
- (504): Berechnungseinheit
- (601): Bedieneinheit
- (701): Anlagensteuerung
- (801,802): Objekte
- E: Scanstrahl
- T: Beobachtungszeitintervall

## Patentansprüche

1. Sensoranordnung (100) mit einem oder mehreren Sensoren (201 - 204), mit einem oder mehreren jeweils ein Objekt (801, 802) kennzeichnenden Betriebsmitteln (101 - 104) und mit einer Verarbeitungseinheit (501), die über eine Kommunikationsverbindung (401) mit dem oder den Sensoren (201 - 204) verbunden ist, wobei jeder Sensor (201 - 204) ausgebildet ist, ein Betriebsmittel (201 - 204) zu lesen und eindeutig zu identifizieren, **dadurch gekennzeichnet, dass** in jedem Sensor (201 - 204) als Sensordaten der Zeitpunkt einer Erfassung eines Betriebsmittels (101 - 104), die Betriebsmittelidentifikation des Betriebsmittels (101 - 104), eine den Sensor (201 - 204) eindeutig identifizierenden Sensoridentifikation und eine für die Erfassung des Betriebsmittels (101 - 104) ermittelte zeit-, sensor- und betriebsmittelabhängige Qualitäts-Kennzahl *q*(*t, s, b*) an die Verarbeitungseinheit (501) übermittelt werden, und dass mittels eines in der Verarbeitungseinheit (501) implementierten Matrix-Faktorierungsalgorithmus aus gemessenen Qualitäts-Kennzahlen *q*(*t, s, b*) Sensor-Qualitätswerte *q*(*t, s*) und Betriebsmittel-Qualitätswerte *q*(*t, b*) separiert werden.

2. Sensoranordnung (100) nach Anspruch 1, **dadurch gekennzeichnet, dass** zu einem vorgegebenen Beobachtungszeitintervall T für jeden Sensor (201 - 204) ein Tauglichkeitswert *h*(*T, s*) ermittelt wird, der angibt, mit welcher Wahrscheinlichkeit der an diesem Sensor (201 - 204) ermittelte Sensor-Qualitätswert *q*(*t, s*) oberhalb eines Schwellwerts *Sₛ* liegt, und für jedes Betriebsmittel (101 - 104) ein Tauglichkeitswert *h*(*T, b*) ermittelt wird, der angibt, mit welcher Wahrscheinlichkeit der für dieses Betriebsmittel (101 - 104) ermittelte Betriebsmittel-Qualitätswert *q*(*t, b*) oberhalb eines Schwellwerts *S_{b}* liegt.

3. Sensoranordnung (100) nach Anspruch 2, **dadurch gekennzeichnet, dass** die Sensoren (201 - 204) und/oder Betriebsmittel (101 - 104), für die Tauglichkeitswerte *h*(*T, s*)*, h*(*T, b*) ermittelt werden, und/oder Beobachtungsintervalle T und/oder Schwellwerte *Sₛ, S_{b}* vorgebbar sind.

4. Sensoranordnung (100) nach einem der Ansprüche 2 oder 3, **dadurch gekennzeichnet, dass** aus einem Vergleich der Tauglichkeitswerte *h*(*T*, *s*), *h*(*T, b*) Verbesserungspotentiale bestimmt werden, in dem der beste Tauglichkeitswert eines Sensors als Referenz genommen wird und für die Tauglichkeitswerte aller anderen Sensoren die Differenz mit dieser Referenz gebildet werden, wodurch sich Verbesserungspotentiale ergeben.

5. Sensoranordnung (100) nach einem der Ansprüche 2 bis 4, **dadurch gekennzeichnet, dass** aus den Tauglichkeitswerten *h*(*T, s*)*, h*(*T, b*) Reproduzierbarkeitswerte bestimmt werden, in dem statistische Streuungen der Tauglichkeitswerte berechnet werden.

6. Sensoranordnung (100) nach einem der Ansprüche 2 bis 5, **dadurch gekennzeichnet, dass** aus den Tauglichkeitswerten *h*(*T, s*)*, h*(*T, b*) Handlungsanweisungen für Sensoren bestimmt werden, welche in maschinenlesbare, automatisch ausführbare Kommandos übersetzt werden.

7. Sensoranordnung (100) nach einem der Ansprüche 2 bis 6, **dadurch gekennzeichnet, dass** aus den ermittelten Tauglichkeitswerten *h*(*T, s*)*, h*(*T, b*) maschinenlesbare Steuerkommandos generiert werden.

8. Sensoranordnung (100) nach einem der Ansprüche 2 bis 6, **dadurch gekennzeichnet, dass** aus den ermittelten Tauglichkeitswerten *h*(*T, s*)*, h*(*T, b*) Parametrierungsanweisungen für Sensoren (201 - 204) generiert werden, mittels derer Parameterwerte von Sensoren geändert werden.

9. Sensoranordnung (100) nach Anspruch 8, **dadurch gekennzeichnet, dass** die Parametrierungsanweisungen nur an solche Sensoren übertragen werden, welche hinsichtlich ihrer Funktionalität den Sensoren (201 - 204) entsprechen, aus deren Tauglichkeitswerten die Parametrierungsanweisungen gewonnen werden.

10. Sensoranordnung (100) nach einem der Ansprüche 8 oder 9, **dadurch gekennzeichnet, dass** für Sensoren (201 - 204) einer Anlage ermittelte Parametrierungsanweisungen an Sensoren einer anderen Anlage übertragen werden.

11. Sensoranordnung (100) nach einem der Ansprüche 2 bis 10, **dadurch gekennzeichnet, dass** aus den ermittelten Tauglichkeitswerten *h*(*T, s*)*, h*(*T, b*) Reststandzeiten von Sensoren (201 - 204) und/oder Betriebsmitteln (101 - 104) bestimmt werden.

12. Sensoranordnung (100) nach einem der Ansprüche 1 bis 11, **dadurch gekennzeichnet, dass** diese mehrere, an unterschiedlichen Orten vorgesehene Sensoren (201 - 204) aufweist, und dass in der Verarbeitungseinheit (501) eine Weganalyse eines Betriebsmittels (101 - 104) entlang der Sensoren (201 - 204) durchgeführt wird.

13. Sensoranordnung (100) nach einem der Ansprüche 1 bis 12, **dadurch gekennzeichnet, dass** Umweltsensoren zur Erfassung weiterer Messgrößen vorgesehen sind.

14. Sensoranordnung (100) nach Anspruch 13, **dadurch gekennzeichnet, dass** die weiteren Messgrößen mit den Sensor-Qualitätswerten *q*(*t, s*) und den Betriebsmittel-Qualitätswerten *q*(*t, b*) verknüpfbar sind.

15. Sensoranordnung (100) nach einem der Ansprüche 1 bis 14, **dadurch gekennzeichnet, dass** die Betriebsmittel (101 - 104) von Marken gebildet sind.

16. Sensoranordnung (100) nach Anspruch 15, **dadurch gekennzeichnet, dass** die Betriebsmittel (101 - 104) von Codes gebildet sind.

17. Sensoranordnung (100) nach einem der Ansprüche 1 bis 16, **dadurch gekennzeichnet, dass** der oder jeder Sensor (201 - 204) ein optischer Sensor ist.

18. Sensoranordnung (100) nach Anspruch 17, **dadurch gekennzeichnet, dass** der optische Sensor ein Codeleser ist.

19. Sensoranordnung (100) nach einem der Ansprüche 1 bis 18, **dadurch gekennzeichnet, dass** die Sensoren (201 - 204) an einer Anlage angeordnet sind, wobei mittels der Anlage Arbeitsvorgänge mit den Objekten (801, 802) durchgeführt werden.

20. Sensoranordnung (100) nach Anspruch 19, **dadurch gekennzeichnet, dass** die Verarbeitungseinheit (501) in einer Anlagensteuerung (701) der Anlage integriert ist oder in einer der Anlage zugeordneten Rechnereinheit integriert ist.

21. Sensoranordnung (100) nach einem der Ansprüche 1 bis 19, **dadurch gekennzeichnet, dass** die Verarbeitungseinheit (501) in einer Cloud integriert oder in einem Virtualisierungs-Container realisiert ist.

22. Sensoranordnung (100) nach einem der Ansprüche 1 bis 19, **dadurch gekennzeichnet, dass** die Verarbeitungseinheit (501) in einem der Sensoren (201 - 204) integriert ist.

23. Sensoranordnung (100) nach einem der Ansprüche 1 bis 22, **dadurch gekennzeichnet, dass** die Verarbeitungseinheit (501) eine Datenerfassungseinheit (503) zur Speicherung von Sensordaten und eine Berechnungseinheit (504) zur Berechnung der Qualitätswerte *q*(*t, s*)*, q*(*t, b*) aufweist.

24. Sensoranordnung (100) nach Anspruch 23, **dadurch gekennzeichnet, dass** in der Berechnungseinheit (504) aus den Qualitätswerten *q*(*t, s*)*, q*(*t, b*) abgeleitete Kenngrößen berechnet werden.

25. Sensoranordnung (100) nach einem der Ansprüche 1 bis 24, **dadurch gekennzeichnet, dass** der Verarbeitungseinheit (501) eine Bedieneinheit (601) zugeordnet ist, welche zur Eingabe von Eingabegrößen und zur Ausgabe von Ausgabegrößen ausgebildet ist.

26. Sensoranordnung (100) nach Anspruch 25, **dadurch gekennzeichnet, dass** an der Bedieneinheit (601) Sensor-Qualitätswerte *q*(*t, s*) und Betriebsmittel-Qualitätswerte *q*(*t, b*) und/oder daraus abgeleitete Kenngrößen angezeigt werden.

27. Sensoranordnung (100) nach Anspruch 26, **dadurch gekennzeichnet, dass** an der Berechnungseinheit (504) der zeitliche Verlauf von Qualitätswerten *q*(*t, s*)*, q*(*t, b*) und/oder daraus abgeleiteten Kenngrößen visualisiert wird.

28. Sensoranordnung (100) nach einem der Ansprüche 25 bis 27, **dadurch gekennzeichnet, dass** die Bedieneinheit (601) eine Internet-Schnittstelle aufweist.

29. Verfahren zum Betrieb einer Sensoranordnung (100) mit einem oder mehreren Sensoren (201 - 204), mit einem oder mehreren jeweils ein Objekt (801, 802) kennzeichnenden Betriebsmitteln (101 - 104) und mit einer Verarbeitungseinheit (501), die über eine Kommunikationsverbindung (401) mit dem oder den Sensoren (201 - 204) verbunden ist, wobei jeder Sensor (201 - 204) ausgebildet ist, ein Betriebsmittel (201 - 204) zu lesen und eindeutig zu identifizieren, **dadurch gekennzeichnet, dass** in jedem Sensor (201 - 204) als Sensordaten der Zeitpunkt einer Erfassung eines Betriebsmittels (101 - 104), die Betriebsmittelidentifikation des Betriebsmittels (101 - 104), eine den Sensor (201 - 204) eindeutig identifizierenden Sensoridentifikation und eine für die Erfassung des Betriebsmittels (101 -104) ermittelte zeit-, sensor- und betriebsmittelabhängige Qualitäts-Kennzahl *q*(*t, s, b*) an die Verarbeitungseinheit (501) übermittelt werden, und dass mittels eines in der Verarbeitungseinheit (501) implementierten Matrix-Faktorierungsalgorithmus aus gemessenen Qualitäts-Kennzahlen *q*(*t, s, b*) Sensor-Qualitätswerte *q*(*t, s*) und Betriebsmittel-Qualitätswerte *q*(*t, b*) separiert werden.

30. Verfahren nach Anspruch 29, **dadurch gekennzeichnet, dass** für den Matrix-Faktorierungsalgorithmus eine Matrix *Mᵢⱼ* gebildet wird, wobei ein Index i oder j die Sensoren (201 - 204) der Sensoranordnung (100) kennzeichnet und der andere Index j oder i die Betriebsmittel (101 - 104) der Sensoranordnung (100) kennzeichnet, dass in einem Einmessvorgang für die Matrix *Mᵢⱼ* Qualitäts-Kennzahlen *qᵢⱼ* mit den Sensoren (201 - 204) der Sensoranordnung (100) ermittelt werden, dass ein Ansatz für die Abhängigkeit der Qualitäts-Kennzahlen von den Sensor-Qualitätswerten *q*(*t, s*) und den Betriebsmittel-Qualitätswerten *q*(*t, b*) entsprechenden Variablen *qₛ*, *q_{b}* in Form einer Funktion *f*(*qₛ*, *q_{b}*) gewählt wird, und dass die Funktionswerte dieser Funktion an die im Einmessvorgang ermittelten Matrixwerte Qualitäts-Kennzahlen *qᵢⱼ* angepasst werden.

31. Verfahren nach Anspruch 30, **dadurch gekennzeichnet, dass** die Anpassung der Funktionswerte mittels eines Optimierungsverfahrens erfolgt.

32. Verfahren nach Anspruch 31, **dadurch gekennzeichnet, dass** das Optimierungsverfahren eine Fehlerminimierung beinhaltet.

33. Verfahren nach einem der Ansprüche 30 bis 32, **dadurch gekennzeichnet, dass** als Ansatz *f*(*qₛ*, *q_{b}*) = *qₛ* · *q_{b}* gewählt wird.

34. Verfahren nach einem der Ansprüche 30 bis 32, **dadurch gekennzeichnet, dass** zur Berechnung der Funktionswerte der Funktion KI (Künstliche Intelligenz)-Algorithmen eingesetzt werden.

35. Verfahren nach einem der Ansprüche 29 bis 34, **dadurch gekennzeichnet, dass** für jedes Betriebsmittel (101 - 104) eine Weganalyse derart durchgeführt wird, dass innerhalb eines vorgegebenen Zeitintervalls eine zeitliche Abfolge erstellt wird, von welchen Sensoren (201 - 204) das Betriebsmittel (101 - 104) erfasst wurde, wobei aus der zeitlichen Abfolge ein Weg erstellt wird, der aus einzelnen Wegabschnitten besteht, die aus Paaren von Sensoren (201 - 204) bestehen, die jeweils nacheinander das Betriebsmittel (101 - 104) erfasst haben.

36. Verfahren nach Anspruch 35, **dadurch gekennzeichnet, dass** zu jedem Wegabschnitt des Wegs eines Betriebsmittels (101 - 104) die absolute Häufigkeit ermittelt wird, mit der dieser Wegabschnitt in dem Zeitintervall durchlaufen wurde.

37. Verfahren nach Anspruch 36, **dadurch gekennzeichnet, dass** die Wege und/oder die Häufigkeiten von Wegabschnitten visualisiert werden.

## Claims

1. A sensor assembly (100) having one or more sensors (201 - 204), having one or more operating means (101 - 104) which in each case identify an object (801, 802), and having a processing unit (501) which is connected to the sensor or sensors (201 - 204) via a communication link (401), each sensor (201 - 204) being designed to read and uniquely identify an operating means (201 - 204), **characterised in that**, in each sensor (201 - 204), the time of detection of an operating means (101 - 104), the operating means identification of the operating means (101 - 104), a sensor identification which uniquely identifies the sensor (201 - 204), and a time-related, operating means identification which is determined for the detection of the operating means (101 - 104) are stored as sensor data, the operating means identification of the operating means (101 - 104), a sensor identification uniquely identifying the sensor (201 - 204) and a time-, sensor- and operating means-dependent quality index *q(t, s, b)* determined for the detection of the operating means (101-104) are transmitted to the processing unit (501), and **in that** sensor quality values *q(t,s)* and operating means quality values *q(t, b)* are separated from measured quality key figures *q(t,s,b)* by means of a matrix factorisation algorithm implemented in the processing unit (501).

2. A sensor assembly (100) according to claim 1, **characterised in that** a suitability value *h(T,s)* is determined for each sensor (201 - 204) at a predetermined observation time interval T, which suitability value indicates the probability with which the sensor quality value *q(t,s)* determined at this sensor (201 - 204) lies above a threshold value *Sₛ*, and a suitability value *h(T,b)* is determined for each operating means (101 -104) which indicates the probability with which the operating means quality value *q(t,b)* determined for this operating means (101 - 104) lies above a threshold value *S_{b}.*

3. A sensor assembly (100) according to claim 2, **characterised in that** the sensors (201 - 204) and/or operating means (101 - 104) for which suitability values *h(T,s*)*, h(T,b)* are determined and/or observation intervals T and/or threshold values *Sₛ,S_{b}* can be predetermined.

4. A sensor assembly (100) according to one of claims 2 or 3, **characterised in that** improvement potentials are determined from a comparison of the suitability values *h(T,s), h(T,b),* in which the best suitability value of a sensor is taken as a reference and the difference with this reference is formed for the suitability values of all other sensors, resulting in improvement potentials.

5. A sensor assembly (100) according to one of claims 2 to 4, **characterised in that** reproducibility values are determined from the suitability values *h(T,s), h(T,h) by* calculating statistical scatter of the suitability values.

6. A sensor assembly (100) according to one of claims 2 to 5, **characterised in that** instructions for sensors are determined from the suitability values *h(T,* s), *h(T, b),* which are translated into machine-readable, automatically executable commands.

7. A sensor assembly (100) according to one of claims 2 to 6, **characterised in that** machine-readable control commands are generated from the determined suitability values *h(T,s), h(T,b).*

8. A sensor assembly (100) according to one of claims 2 to 6, **characterised in that** parameterisation instructions for sensors (201 - 204) are generated from the determined suitability values *h(T,* s), *h(T, b),* by means of which parameter values of sensors are changed.

9. A sensor assembly (100) according to claim 8, **characterised in that** the parameterisation instructions are transmitted only to those sensors which correspond in terms of their functionality to the sensors (201 - 204) from whose suitability values the parameterisation instructions are obtained.

10. A sensor assembly (100) according to one of claims 8 or 9, **characterised in that** parameterisation instructions determined for sensors (201 - 204) of one installation are transmitted to sensors of another installation.

11. A sensor assembly (100) according to one of the claims 2 to 10, **characterised in that** residual state times of sensors (201 - 204) and/or operating means (101 - 104) are determined from the determined suitability values *h(T,s), h(T,b).*

12. A sensor assembly (100) according to any one of claims 1 to 11, **characterised in that** it comprises a plurality of sensors (201 - 204) provided at different locations, and **in that** a path analysis of an operating means (101 -104) along the sensors (201 - 204) is carried out in the processing unit (501).

13. A sensor assembly (100) according to one of claims 1 to 12, **characterised in that** environmental sensors are provided for detecting further measured variables.

14. A sensor assembly (100) according to claim 13, **characterised in that** the further measured variables can be linked to the sensor quality values *q(t,s)* and the operating means quality values *q(t,b).*

15. A sensor assembly (100) according to one of claims 1 to 14, **characterised in that** the operating means (101 - 104) are formed by marks.

16. A sensor assembly (100) according to claim 15, **characterised in that** the operating means (101 - 104) are formed by codes.

17. A sensor assembly (100) according to any one of claims 1 to 16, **characterised in that** the or each sensor (201 - 204) is an optical sensor.

18. A sensor assembly (100) according to claim 17, **characterised in that** the optical sensor is a code reader.

19. A sensor assembly (100) according to any one of claims 1 to 18, **characterised in that** the sensors (201 - 204) are arranged on a system, with operations being carried out with the objects (801, 802) by means of the system.

20. A sensor assembly (100) according to claim 19, **characterised in that** the processing unit (501) is integrated in a system controller (701) of the system or is integrated in a computer unit associated with the system.

21. A sensor assembly (100) according to any one of claims 1 to 19, **characterised in that** the processing unit (501) is integrated in a cloud or implemented in a virtualisation container.

22. A sensor assembly (100) according to any one of claims 1 to 19, **characterised in that** the processing unit (501) is integrated in one of the sensors (201 - 204).

23. A sensor assembly (100) according to any one of claims 1 to 22, **characterised in that** the processing unit (501) comprises a data acquisition unit (503) for storing sensor data and a calculation unit (504) for calculating the quality values *q(t,s), q(t,b).*

24. A sensor assembly (100) according to claim 23, **characterised in that** characteristic quantities derived from the quality values *q(t,s), q(t,b)* are calculated in the calculation unit (504).

25. A sensor assembly (100) according to one of claims 1 to 24, **characterised in that** the processing unit (501) is assigned an operating unit (601) which is designed for inputting input variables and for outputting output variables.

26. A sensor assembly (100) according to claim 25, **characterised in that** sensor quality values *q(t,s)* and operating means quality values *q(t,b)* and/or characteristic variables derived therefrom are displayed on the operating unit (601).

27. A sensor assembly (100) according to claim 26, **characterised in that** the time course of quality values *q(t,s), q(t,b)* and/or characteristic quantities derived therefrom is visualised at the calculation unit (504).

28. A sensor assembly (100) according to any one of claims 25 to 27, **characterised in that** the operating unit (601) has an Internet interface.

29. A method for operating a sensor assembly (100) having one or more sensors (201 - 204), having one or more operating means (101 - 104) which in each case identify an object (801, 802), and having a processing unit (501) which is connected to the sensor or sensors (201 - 204) via a communication link (401), each sensor (201 - 204) being designed to read and uniquely identify an operating means (201 - 204), **characterised in that**, in each sensor (201 - 204), the time of a detection of an operating means (101 - 104), the operating means identification of the operating means (101 - 104), a sensor identification which uniquely identifies the sensor (201 - 204), and a time determined for the detection of the operating means (101 - 104) are stored as sensor data, the operating means identification of the operating means (101 - 104), a sensor identification uniquely identifying the sensor (201 - 204), and a time-dependent, sensor-dependent and operating means-dependent quality code *q(t,s,b)* are transmitted to the processing unit (501), and **in that** sensor quality values *q(t,s)* and resource quality values *q(t,b)* are separated from measured quality key figures *q(t,s,b)* by means of a matrix factorisation algorithm implemented in the processing unit (501).

30. A method according to claim 29, **characterised in that** a matrix *Mᵢⱼ* is formed for the matrix factorization algorithm, one index i or j characteriszing the sensors (201 - 204) of the sensor assembly (100) and the other index j or i characterising the operating means (101 - 104) of the sensor assembly (100), **in that** quality key figures *qᵢⱼ* are determined with the sensors (201 - 204) of the sensor assembly (100) in a calibration process for the matrix, **in that** an approach for the dependence of the quality indicators on the sensor quality values *q(t,s)* and variables *qₛ*, *q_{b}* corresponding to the operating means quality values *q(t, b)* is selected in the form of a function *f(qₛ*,*q_{b}*), and **in that** the function values of this function are adapted to the matrix values quality indicators *qᵢⱼ* determined in the calibration process.

31. A method according to claim 30, **characterised in that** the adaptation of the functional values is carried out by means of an optimisation method.

32. A method according to claim 31, **characterised in that** the optimisation method includes error minimisation.

33. A method according to any one of claims 30 to 32, **characterised in that** the approach chosen is *f(qₛ,q_{b})* = *qₛ* . *q_{b}* .

34. A method according to any one of claims 30 to 32, **characterised in that** AI (artificial intelligence) algorithms are used to calculate the function values of the function.

35. A method according to any one of claims 29 to 34, **characterised in that** a path analysis is carried out for each operating means (101-104) in such a way that, within a predetermined time interval, a time sequence is produced by which sensors (201-204) the operating means (101-104) has been detected, a path being produced from the time sequence which consists of individual path sections which consist of pairs of sensors (201-204) which have each successively detected the operating means (101-104).

36. A method according to claim 35, **characterised in that** for each path section of the path of an operating means (101 - 104), the absolute frequency with which this path section was traversed in the time interval is determined.

37. A method according to claim 36, **characterised in that** the paths and/or the frequencies of path segments are visualised.

## Revendications

1. Agencement de capteur (100) comportant un ou plusieurs capteurs (201 - 204), comportant un ou plusieurs moyens de fonctionnement (101 - 104) qui, dans chaque cas, identifient un objet (801, 802), et comportant une unité de traitement (501) qui est connectée au(x) capteur(s) (201 - 204) par l'intermédiaire d'une liaison de communication (401), chaque capteur (201 - 204) étant conçu pour lire et identifier de manière unique un moyen de fonctionnement (201 - 204), **caractérisé en ce que**, dans chaque capteur (201 - 204), le moment de la détection d'un moyen de fonctionnement (101 - 104), l'identification du moyen de fonctionnement (101 - 104), une identification du capteur qui identifie de manière unique le capteur (201 - 204), et une identification du moyen de fonctionnement liée au temps, l'identification des moyens de fonctionnement (101 - 104), l'identification du capteur qui identifie de manière unique le capteur (201 - 204) et un indice de qualité *q(t,s,b)* dépendant du temps, du capteur et des moyens de fonctionnement sont stockés en tant que données de capteur, déterminé pour la détection des moyens d'exploitation (101-104) sont transmis à l'unité de traitement (501), où les valeurs de qualité du capteur *q(t,s)* et les valeurs de qualité des moyens d'exploitation *q(t,b)* sont séparées des ratios de qualité mesurés *q(t,s,b)* au moyen d'un algorithme de factorisation matricielle mis en oeuvre dans l'unité de traitement (501).

2. Agencement de capteur (100) selon la revendication 1, **caractérisé en ce qu'**une valeur d'aptitude *h(T,s)* est déterminée pour chaque capteur (201 - 204) à un intervalle de temps d'observation T prédéterminé, laquelle valeur d'aptitude indique la probabilité avec laquelle la valeur de qualité du capteur *q(t,s)* déterminée pour ce capteur (201 - 204) est supérieure à une valeur seuil *Sₛ*, et une valeur d'aptitude *h(T, b)* est déterminée pour chaque moyen de fonctionnement (101 - 104) qui indique la probabilité avec laquelle la valeur de qualité du moyen de fonctionnement *q(t, b)* déterminée pour ce moyen de fonctionnement (101 - 104) est supérieure à une valeur seuil *S_{b} .*

3. Agencement de capteur (100) selon la revendication 2, **caractérisé par le fait que** les capteurs (201 - 204) et/ou les moyens d'exploitation (101 - 104) pour lesquels les valeurs d'aptitude *h(T, s), h(T,b)* sont déterminées et/ou les intervalles d'observation T et/ou les valeurs seuils *Sₛ,S_{b}* peuvent être prédéterminés.

4. Agencement de capteur (100) selon l'une des revendications 2 ou 3, **caractérisé par le fait que** les potentiels d'amélioration sont déterminés à partir d'une comparaison des valeurs d'aptitude *h(T,s), h(T,b),* dans laquelle la meilleure valeur d'aptitude d'un capteur est prise comme référence et la différence avec cette référence est formée pour les valeurs d'aptitude de tous les autres capteurs, ce qui donne des potentiels d'amélioration.

5. Agencement de capteur (100) selon l'une des revendications 2 à 4, **caractérisé par le fait que** les valeurs de reproductibilité sont déterminées à partir des valeurs d'aptitude *h(T,s), h(T,h) en* calculant la dispersion statistique des valeurs d'aptitude.

6. Agencement de capteur (100) selon l'une des revendications 2 à 5, **caractérisé par le fait que** les instructions pour les capteurs sont déterminées à partir des valeurs d'aptitude *h(T,s), h(T,b),* qui sont traduites en commandes lisibles par la machine et exécutables automatiquement.

7. Agencement de capteur (100) selon l'une des revendications 2 à 6, **caractérisé par le fait que** des commandes de contrôle lisibles par la machine sont générées à partir des valeurs d'aptitude déterminées *h(T,s), h(T,b).*

8. Agencement de capteur (100) selon l'une des revendications 2 à 6, **caractérisé par le fait que** des instructions de paramétrage pour les capteurs (201 - 204) sont générées à partir des valeurs d'aptitude déterminées *h(T,s), h(T,b),* au moyen desquelles les valeurs des paramètres des capteurs sont modifiées.

9. Agencement de capteur (100) selon la revendication 8, **caractérisé par le fait que** les instructions de paramétrage ne sont transmises qu'aux capteurs qui correspondent, en termes de fonctionnalité, aux capteurs (201 - 204) dont les valeurs d'aptitude ont permis d'obtenir les instructions de paramétrage.

10. Agencement de capteur (100) selon l'une des revendications 8 ou 9, **caractérisé par le fait que** les instructions de paramétrage déterminées pour les capteurs (201 - 204) d'une installation sont transmises aux capteurs d'une autre installation.

11. Agencement de capteur (100) selon l'une des revendications 2 à 10, **caractérisé en ce que** les temps d'état résiduels des capteurs (201 - 204) et/ou des moyens de fonctionnement (101 - 104) sont déterminés à partir des valeurs d'aptitude déterminées *h(T,s), h (T, b).*

12. Agencement de capteur (100) selon l'une des revendications 1 à 11, **caractérisé par le fait qu'**il comprend plusieurs capteurs (201 - 204) placés à différents endroits, et **par le fait qu'**une analyse de la trajectoire d'un moyen de fonctionnement (101 -104) le long des capteurs (201 - 204) est effectuée dans l'unité de traitement (501).

13. Agencement de capteur (100) selon l'une des revendications 1 à 12, **caractérisé par** la présence de capteurs environnementaux pour la détection d'autres variables mesurées.

14. Agencement de capteur (100) selon la revendication 13, **caractérisé par le fait que** les autres variables mesurées peuvent être liées aux valeurs de qualité du capteur *q(t,s)* et aux valeurs de qualité des moyens d'exploitation *q(t, b).*

15. Agencement de capteur (100) selon l'une des revendications 1 à 14, **caractérisé par le fait que** les moyens de commande (101 - 104) sont formés par des marques.

16. Agencement de capteur (100) selon la revendication 15, **caractérisé par le fait que** les moyens de commande (101 - 104) sont formés par des codes.

17. Agencement de capteur (100) selon l'une des revendications 1 à 16, **caractérisé par le fait que** le ou chaque capteur (201 - 204) est un capteur optique.

18. Agencement de capteur (100) selon la revendication 17, **caractérisé par le fait que** le capteur optique est un lecteur de code.

19. Agencement de capteur (100) selon l'une des revendications 1 à 18, **caractérisé par le fait que** les capteurs (201 - 204) sont disposés sur un système, les opérations étant effectuées avec les objets (801, 802) au moyen du système.

20. Agencement de capteur (100) selon la revendication 19, **caractérisé en ce que** l'unité de traitement (501) est intégrée dans un dispositif de commande de système (701) du système ou est intégrée dans une unité informatique associée au système.

21. Agencement de capteur (100) selon l'une des revendications 1 à 19, **caractérisé par le fait que** l'unité de traitement (501) est intégrée dans un nuage ou mise en oeuvre dans un conteneur de virtualisation.

22. Agencement de capteur (100) selon l'une des revendications 1 à 19, **caractérisé par le fait que** l'unité de traitement (501) est intégrée dans l'un des capteurs (201 - 204).

23. Agencement de capteur (100) selon l'une des revendications 1 à 22, **caractérisé par le fait que** l'unité de traitement (501) comprend une unité d'acquisition de données (503) pour stocker les données du capteur et une unité de calcul (504) pour calculer les valeurs de qualité *q(t,s), q(t,b).*

24. Agencement de capteur (100) selon la revendication 23, **caractérisé par le fait que** les grandeurs caractéristiques dérivées des valeurs de qualité *q(t,s), q(t,b)* sont calculées dans l'unité de calcul (504).

25. Agencement de capteur (100) selon l'une des revendications 1 à 24, **caractérisé par le fait que** l'unité de traitement (501) est associée à une unité d'exploitation (601) conçue pour saisir des variables d'entrée et pour émettre des variables de sortie.

26. Agencement de capteur (100) selon la revendication 25, **caractérisé en ce que** les valeurs de qualité des capteurs *q(t,s)* et les valeurs de qualité des moyens de fonctionnement *q(t,b)* et/ou les variables caractéristiques qui en découlent sont affichées sur l'unité de commande (601).

27. Agencement de capteur (100) selon la revendication 26, **caractérisé en ce que** l'évolution temporelle des valeurs de qualité *q(t,s), q(t,b)* et/ou des grandeurs caractéristiques qui en découlent est visualisée au niveau de l'unité de calcul (504).

28. Agencement de capteur (100) selon l'une des revendications 25 à 27, **caractérisé par le fait que** l'unité de commande (601) possède une interface Internet.

29. Procédé de fonctionnement d'un agencement de capteur (100) comportant un ou plusieurs capteurs (201 - 204), comportant un ou plusieurs moyens de fonctionnement (101 - 104) qui, dans chaque cas, identifient un objet (801, 802), et comportant une unité de traitement (501) qui est connectée au(x) capteur(s) (201 - 204) par l'intermédiaire d'une liaison de communication (401), chaque capteur (201 - 204) étant conçu pour lire et identifier de manière unique un moyen de fonctionnement (201 - 204), **caractérisé en ce que**, dans chaque capteur (201 - 204), le moment de la détection d'un moyen de fonctionnement (101 - 104), l'identification du moyen de fonctionnement (101 - 104), une identification du capteur qui identifie de manière unique le capteur (201 - 204), et un temps déterminé pour la détection d'un moyen de fonctionnement (101 - 104), l'identification du moyen de fonctionnement (101 - 104), une identification du capteur qui identifie de manière unique le capteur (201 - 204), et un temps déterminé pour la détection du moyen de fonctionnement (101 - 104) sont stockés en tant que données de capteur, l'identification du moyen de fonctionnement (101 - 104), une identification de capteur identifiant de manière unique le capteur (201 - 204), et un code de qualité dépendant du temps, dépendant du capteur et dépendant du moyen de fonctionnement *q(t,s,b)* sont transmis à l'unité de traitement (501), où les valeurs de qualité du capteur *q(t,s)* et les valeurs de qualité de la ressource *q(t, b)* sont séparées des ratios de qualité mesurés *q(t,s,b)* au moyen d'un algorithme de factorisation matricielle mis en oeuvre dans l'unité de traitement (501).

30. Procédé selon la revendication 29, **caractérisé en ce qu'**une matrice *Mᵢⱼ* est formée pour l'algorithme de factorisation matricielle, un indice i ou j caractérisant les capteurs (201 - 204) de l'agencement de capteur (100) et l'autre indice j ou i caractérisant les moyens d'exploitation (101 - 104) de l'agencement de capteur (100), **en ce que** les ratios de qualité *qᵢⱼ* sont déterminés avec les capteurs (201 - 204) de l'agencement de capteur (100) dans un processus d'étalonnage de la matrice, une approche de la dépendance des indicateurs de qualité par rapport aux valeurs de qualité des capteurs *q(t,s)* et aux variables *qₛ*, *q_{b}* correspondant aux valeurs de qualité des moyens d'exploitation q*(t,b)* est sélectionnée sous la forme d'une fonction *f(qₛ,q_{b})*, et les valeurs de cette fonction sont adaptées aux valeurs matricielles des indicateurs de qualité *qᵢⱼ* déterminées dans le processus d'étalonnage.

31. Procédé selon la revendication 30, **caractérisé par le fait que** l'adaptation des valeurs fonctionnelles est effectuée au moyen d'un procédé d'optimisation.

32. Procédé selon la revendication 31, **caractérisée par le fait que** le procédé d'optimisation comprend la minimisation de l'erreur.

33. Procédé selon l'une quelconque des revendications 30 à 32, **caractérisé par le fait que** l'approche choisie est *f(q_{s,}q_{b})* = *qₛ* . *q_{b}.*

34. Procédé selon l'une des revendications 30 à 32, **caractérisé par** l'utilisation d'algorithmes d'intelligence artificielle pour calculer les valeurs de la fonction.

35. Procédé selon l'une quelconque des revendications 29 à 34, **caractérisé en ce qu'**une analyse de trajectoire est effectuée pour chaque moyen de fonctionnement (101-104) de manière à produire, dans un intervalle de temps prédéterminé, une séquence temporelle par laquelle les capteurs (201-204) ont détecté le moyen de fonctionnement (101-104), une trajectoire étant produite à partir de la séquence temporelle qui consiste en sections de trajectoire individuelles constituées de paires de capteurs (201-204) qui ont chacun détecté successivement le moyen de fonctionnement (101-104).

36. Procédé selon la revendication 35, **caractérisé par le fait que** pour chaque section de la trajectoire d'un moyen d'exploitation (101 - 104), la fréquence absolue avec laquelle cette section de la trajectoire a été parcourue dans l'intervalle de temps est déterminée.

37. Procédé selon la revendication 36, **caractérisé par** la visualisation des trajets et/ou des fréquences des segments de trajets.
